# EUROPEAN PATENT APPLICATION

(11) **EP 2 621 167 A1**
(43) Date of publication of application: **31.07.2013**
(21) Application number: 11826849.9
(22) Date of filing: 21.09.2011
(51) Int. Cl.: H04N 7/173

(54) **VIDEO BIT STREAM TRANSMISSION SYSTEM**

(30) Priority: 24.09.2010 US 386234 P
(71) Applicant: Gnzo Inc., Kanagawa 258-0015 (JP)
(72) Inventor: KASAI, Hiroyuki, Choufu-shi Tokyo 182-8585 (JP); UCHIHARA, Naofumi, Choufu-shi Tokyo 182-8585 (JP)
(74) Representative: Piotrowicz, Pawel Jan Andrzej
(86) International application number: PCT/JP2011/071416
(87) International publication number: WO 2012/039404

(57) **Abstract**

Problem: To implement control, in distribution of high definition video signals in which it is possible to freely move viewing regions, to determine viewing movement without dependence on a user operation. Method of Solution: There are provided, a video region division processing step for dividing a video region of an input video signal into a specified number of regions, and generating a plurality of region divided video signals corresponding to each of the divided regions obtained by the division, an encoding processing step for generating a plurality of video bit streams by encoding the plurality of region divided video signals, a step of storing a plurality of video bit streams that have been generated in the encoding processing step into a video bit stream group storage section, a transmission bit stream generating step, for extracting from the video bit stream group storage section the video bit stream based on the viewpoint movement information that has been generated in the viewpoint movement information determination step, and generating a transmission video bit stream, and a video bit stream transmission step for transmitting the transmission video bit stream that was generated in the transmission bit stream generating step to a receiving unit, wherein, in the viewpoint movement information determination step, viewpoint movement information is determined in order to specify a region for viewing from among the video regions, and further in the viewpoint movement information determination, the viewpoint information is automatically determined, regardless of user instruction, based on specified data.

## Description

### Technical field

The present invention relates to a video bit stream transmission system. In particular, the present invention relates to technology for distributing video corresponding to an arbitrary viewing region from a transmission unit to a receiving unit.

### Background art

There has been a lot of research and development into making video information high resolution, wide-field, and highly functional. For example, non-patent literature 1 below proposes a system for segmenting and encoding video acquired from a plurality of video cameras or an all-around camera into a plurality of regions, and decoding and displaying only regional video of a viewing location the user requests. Also, non-patent literature 2 below proposes a system for implementing access to high definition panorama video that has been acquired from a plurality of video cameras on the basis of Multi-view Coding, which is an expanded standard of H.264/AVC. This technology also carries out segmentation and encoding of input video, and transmission, decoding and display of a plurality of encoded streams in accordance with a viewing region the user (client) requests.

However, the following non-patent literature 1 and 2 both require simultaneous decoding and synchronized display of a plurality of streams of the client. Further, in non-patent literature 1 there is no mention of a transmission method, while in non-patent literature 2 there is also a need for plural session control in order to simultaneously acquire a plurality of streams. Since these plural controls increase the complexity of processing in clients, in environments where computational resources are limited, particularly in a smart phone, use of a multivision service becomes difficult.

A system that does not transmit a plurality of streams but carries out transmission of a single stream after combining a plurality of streams at the server side has therefore been proposed (non-patent literature 3 and patent literature 1 below). With this technology, since a client decodes and displays only a single stream that has been acquired from a delivery server, it is possible to avoid complicated processing such as simultaneously decoding a plurality of streams and synchronously displaying the decoded video signals. In this way, it becomes possible to simultaneously playback a plurality of videos using a conventional video playback system.

With these conventional systems, it becomes possible for a user to freely move and configure viewing region positions for video that is displayed. In this way, without being limited to video controls such as playback, pause, rewind, fast forward etc. , as is the case with on-demand type video streaming that has appeared on the internet in recent years, operations to move viewing region positions, in a video region, in a vertical direction or horizontal direction become possible.

### Citation list

### Patent Literature

Non-patent Literature 1: S.Heymann, A.Smolic, K.Muller, Y.Guo, J.Rurainski, P.Eisert, and T.Wiegand, "Representation, Coding and Interactive Rendering or High-Resolution Panoramic Images and Video using MPEG-4", Proc.Panoramic Photogrammetry Workshop, Berlin, Germany, Feb. 2005.
Non-patent Literature 2: H.Kimata, S.Shimizu, Y Kunita, M.Isogai and Y.Ohtani, "Panorama video coding for user-driven interactive video application", IEEE International Symposium on Consumer Electronics, Kyoto, 2009.
Non-patent Literature 3: N.Uchihara, H. Kasai, "Fast stream joiner for next-generation interactive video", IEEE International Conference on Consumer Electronics (ICCE), 2011, pp.319-320, 9-12 Jan. 2011.
Patent Literature 4: Laid-Open Patent Publication No. 2011-24018

### Summary of the Invention

### Technical Problem

However, each of the above described technologies assume that a viewing user will voluntarily select a viewing region for video, and that a viewing region will be determined on the basis of viewpoint movement information determined by a user operation from a client terminal, which is a video viewing terminal, or a controller unit connected to the client terminal. However, it is also envisaged that a user passively viewing video, as with conventional television viewing, would not necessarily proactively move viewpoint. Accordingly, with these conventional technologies, it can be considered that there will be situations where a free viewpoint movement function is not fully exploited.

Further, at the video delivery side there have been calls for effective delivery of video such as advertisements etc., which means a demand also exists for proactive control of video regions that the viewing user will view. However, with the situation up to new, in order for a viewing user's viewpoint movement operation to become the source, there has been a problem in that those types of demands cannot be realized.

The present invention has been conceived in view of these points, and has as its object to determine viewpoint movement information for determining a viewing region, without a user's explicit viewpoint moving operation, and reflecting this in the composition of a distributed video.

### Solution to the Problem

In order to solve the above-described problems, the present invention disassociates processing for determining viewpoint movement information from a user interface on a client. Also, delivery on a processor system for carrying out the above described determination is not limited to being to a client, and can be delivery to a video distribution server, or an external independent server.

With this type of configuration, when determining viewpoint movement information, since it becomes possible to determine the information without being dependent on a user's operation, various type of control for viewpoint movements becomes possible.

In the present invention, processing sections for determining viewpoint movement information may be embedded into receiving units or transmission units, and may be embedded into another external server.

### Advantageous Effects of the Invention

According to the present invention, it becomes possible to automatically determine viewpoint movement information from various causes at a system side. For example, it becomes possible to automatically determine viewpoint movement from physical position or environmental conditions of the client terminal, or a user's operation history or profile etc.

It also becomes possible to determine viewpoint movement information at a distribution server, and detailed control taking into consideration viewing history of a plurality of users and viewing history of the viewing user becomes possible.

Also, it becomes possible to proactively control viewpoint movement to an explicit or implied advertisement video, and it becomes possible to formulate a novel video advertisement model business.

### Brief Description of Drawings

Fig. 1 is a schematic drawing showing an outline of a transmission system of a first embodiment of the present invention.
Fig. 2 is a schematic drawing showing a structural example of a server (transmission unit) of the first embodiment of the present invention.
Fig. 3 is a schematic drawing showing a structural example of a client (receiving unit) of the first embodiment of the present invention.
Fig. 4 is a flowchart of the first embodiment of the present invention.
Fig 5 is a schematic drawing showing a structural example of a server of a second embodiment of the present invention.
Fig 6 is a schematic drawing showing a structural example of a client of the second embodiment of the present invention.
Fig. 7 is a flowchart of the second embodiment of the present.
Fig 8 is a schematic drawing showing a structural example of a server of a third embodiment of the present invention.
Fig 9 is a schematic drawing showing a structural example of a client of the third embodiment of the present invention.
Fig. 10 is a flowchart of the third embodiment of the present invention.
Fig. 11 is an explanatory drawing showing the relationship between an overall region, a viewing region, and a display region.
Fig. 12 is an explanatory drawing for explaining change in a viewing region accompanying viewpoint movement.

### Description of Embodiments

Embodiments of the invention will be described in the following. Description will be given in the following order.
1. First Embodiment (example of determining viewpoint movement information at a client and transmitting that information to a video distribution server)
2. Second Embodiment (example of determining viewpoint movement information at a video distribution server, transmitting that information to a client, and returning information from the client to the video distribution server)
3. Third Embodiment (example of determining viewpoint movement information at a video distribution server, and utilizing that information directly at the video distribution server)

### <1. First Embodiment>

The first embodiment (hereafter referred to as this example) will be described with a transmission device of the present invention applied to a server, and a receiving device of the present invention applied to a mobile telephone terminal. However, the receiving device of the present invention is not limited to a mobile telephone terminal and it can also apply to various devices having a communication function and a function to display videos on a display section, such as a PDA (Personal Digital Assistant), personal computer, music player or game terminal etc.

Description will be given in the following order.
(1) Transmission system Overview
(2) Structural example of server
(3) Structural example of client
(4) Transmission system operational example

### [Outline of Transmission System]

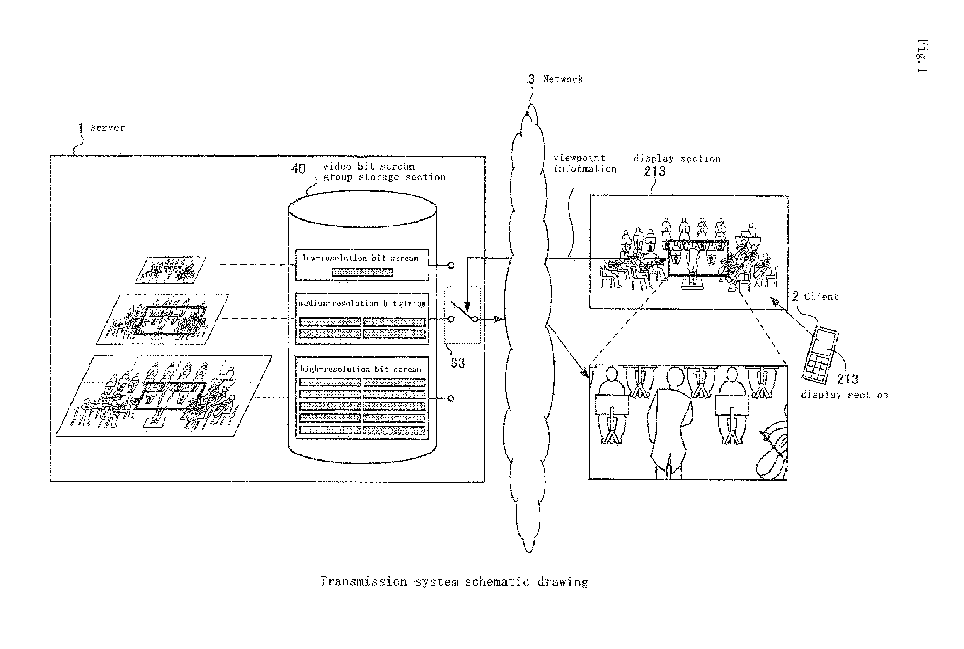

First, an overview of the transmission system of this example will be described with reference to Fig. 1. Fig. 1 shows an overview of .a transmission system of this embodiment. The transmission system shown in Fig. 1 is made up of a server 1 (corresponding to an actual example of the transmission device) for carrying out delivery of videos, and a client 2 (corresponding to an actual example of the receiving device). The server 1 and the client 2 are connected via a network 3. In Fig. 1, only a single client 2 is shown, but in actual fact it is possible to have a configuration in which it is possible for a plurality of clients 2 to access the server 1 via the network 3.

A video signal input section constituted by an imaging device, not shown, is connected to the server 1, and video that has been obtained by the video signal input section is input to the server 1.

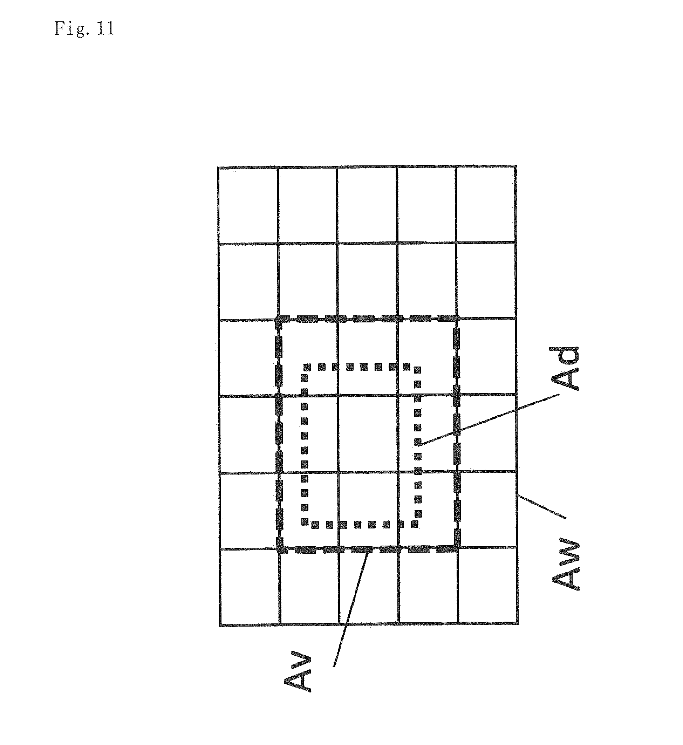

By transmitting a viewpoint movement information that has been determined within a client 2 to a server 1, the server 1 creates a video (hereafter referred to as an overall region video) corresponding to an overall region (hereafter referred to as overall region Aw) made up of one or more videos and a video (hereafter referred to as a viewing region video) that is determined in accordance with a specified region (hereafter referred to as a viewing region Av) designated by the viewpoint movement information. The server 1 then transmits the viewing region video to the client 2. At the client 2, all or part of the viewing region video that has been transmitted is displayed in a display region (hereafter referred to as display region Ad) on the client 2. The relationship between each of these regions is shown in Fig. 11. The overall region Aw is constructed by combining divided regions (described later) shown as small quadrangles in the drawing. The same applies to the viewing region Av. However, the display region Ad is determined in accordance with display capacity at the client 2, regardless of division of the divided regions.

Further, this viewpoint movement information is not only information on viewpoint movement in the horizontal and vertical directions within the viewing region video, and also includes information for increasing and reducing resolution of the viewing region video. By determining the viewing region Av using this viewpoint movement information, then in the client 2 it becomes possible to view a video of a designated region within a screen at a higher resolution, and possible to get an overview of an overall picture of an original video at a lower resolution, or of a plurality of videos at one time as well.

In this way, with this embodiment viewpoint movement information for determining size and position of the viewing region video, or for carrying out enlargement or reduction of the viewing region video, is determined by a viewpoint movement information determination section within the client 2. Regarding determination, it is possible, for example, to use various factors, such as a past viewing history of the user, a viewing history of other users, a viewing user profile, association between a plurality of videos, weight applied to each video by video suppliers, movement information for objects within a video, or current physical position and location information etc. Detailed description accompanying examples of this point will be given later.

In order to realize this type of function, in the server 1 processing is first carried out to generate a video encoded bit stream (hereafter referred to simply as bit stream) from an original non-compressed video that has been input from the video signal input section.

This video encoded bit stream is generated in respective divided region units that are derived by dividing the video region of the original video into one or more regions. In the following description, a bit stream that has been generated for every divided region is referred to as a divided region video bit stream.

The server 1 generates this type of divided region video bit stream in advance, and stores in a video bit stream group storage section 40 that is constituted by a storage device such as a HDD (Hard Disk Drive) or the like.

Further, at the server 1 this divided region video bit stream is generated in correspondence with a plurality of resolutions. Divided region video bit streams corresponding to each resolution that have been generated in this way are then stored in the video bit stream group storage section 40. As shown in Fig.1, the viewing region video bit stream is stored in each of three resolution levels, being low, medium and high (refer to Fig.1). This is similar to those of non-patent literature 3 and patent literature 1 mentioned above.

The server 1 then extracts a divided region video bit stream corresponding to the viewing region Av designated by the viewpoint movement information containing vertical and lateral position and resolution information, and transmits a bit stream constructed therefrom (hereafter referred to as viewing region video bit stream) to the client 2. The viewing region video bit stream is constructed as a single stream in this embodiment, as will be described later.

In this way, even in the case where various viewpoint movement information having different lateral and vertical position and resolution are transmitted from the client 2, it is possible for the server 1 to extract bit streams corresponding to regions and resolutions designated by the viewpoint movement information, and transmit to the client 2. A network 3 of this embodiment is the Internet, for example, but a protocol used is not particularly limited.

### [Structural example of server]

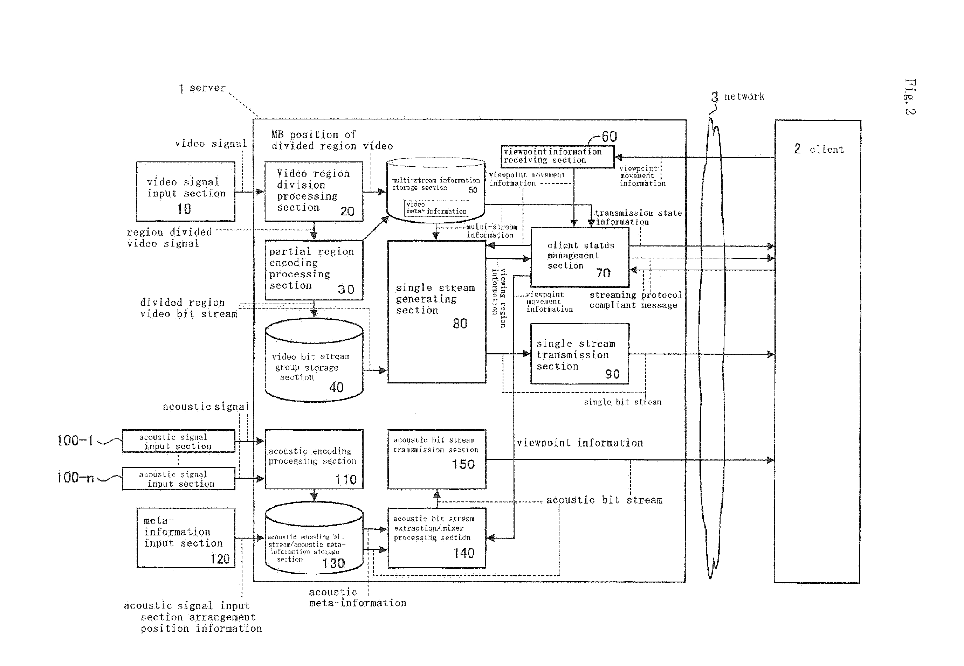

Next, description will be given of the structural example of a server 1, with reference to Fig. 2. Fig. 2 is a block diagram showing an internal structural example of a server 1. A video signal input section 10 is connected to the server 1. The server 1 also includes a video region division processing section 20, a partial region encoding processing section 30, a video bit stream group storage section 40, and a multi-stream information storage section 50.

A video signal input section 10 inputs a video signal to the server 1, and can be constituted by, for example, a camera such as a broadcasting camera, an observation camera or a camera used in teleconferencing etc., but this is not limiting. The video signal input section 10 may be connected to the server 1 by means of a network, for example. A video region division processing section 20 divides a video region that is formed by a video signal input from the video signal input section 10 into one or more respective regions having one or more resolutions.

The partial region encoding processing section 30 encodes video signals for each divided region of each resolution level generated by the video region division processing section 20, to generate a divided region video bit stream. The encoding carried out here is carried out in a format that does not have a predictive relationship between each divided region, regarding coding information such as movement vectors, quantization coefficient and quantization parameter etc. As an encoding method it is possible to use MPEG-2, MPEG-4 SP, H. 263, H. 264 etc, while this is not limiting.

A video bit stream group storage section 40 stores a plurality of divided region video bit streams that have been generated by the partial region encoding processing section 30, categorized for each resolution level.

The multi-stream information storage section 50 manages information relating to encoding processing or its quality of each divided region video bit stream generated by the partial region encoding processing section 30, and position information showing what position within the whole region Aw each divided region belongs to. Further, the multi-stream information storage section 50 storages and manages video meta-information described below. The video meta-information may be stored in the place where the system of this embodiment can access the information, so that the storing place is not limited.

Next, description will be given of viewpoint movement information transmitted from the client 2. The viewpoint movement information of this embodiment contains the following information.
- Position information of viewpoints for the overall region Aw or position change information;
- Regeneration information or resolution change information.

Continuing the description by returning once again to Fig. 2, the server 1 comprises a viewpoint information reception section 60, a client status management section 70, a single stream generating section 80, and a single stream transmission section 90.

The viewpoint information reception section 60 receives viewpoint movement information that has been transmitted from the client 2 via the network 3, and supplies this information to the client status management section 70.

The client status management section 70 carries out management of viewpoint movement information, and transmission and reception of control data (streaming protocol compliance messages) to be exchanged with the client 2 at the time of streaming delivery of audio and video etc.

The client status management section 70 carries out processing to transmit some or all of the following information to the transmission state information receiving section 208 of the client 2, as transmission state information:
- viewing region information indication position, of the viewing region Av contained in a transmitted viewing region video bit stream, within the overall region Aw;
- video meta information for video contained in the overall region Aw or the viewing region Av.

Within the transmission state information, viewing region information is determined inside the single stream generating section 80, and as described previously, this viewing region information contains relative position information of the viewing region Av with respect to the overall region Aw. A method of creating this relative position information will be described in the following. The overall region Aw is constituted by a plurality of divided region videos, and so a transmitted video of the viewing region Av is constituted by some of the plurality divided region videos constituting the overall region Aw. Accordingly, a position taken within the viewing region Av is a position within the overall region Aw that is separated by a border of the divided region. On the other hand, the display region Ad determined by the viewpoint movement information is freely specified with respect to the overall region Aw. This means that the viewing region Av constitutes information for specifying an optimum region, among partial regions constituted by some of the divided regions constituting the overall region Aw. This optimum region is a region where, for example, a surface area that overlaps with the display region Ad determined by the viewpoint movement information is largest.

On the other hand, within transmission state information, video meta information is information that is used in determining viewpoint movement information at the client side, and this information includes information relating to the video itself and information relating to viewing history of the video. Examples of video meta information is shown below.
- Information representing what type of video is at what position within the overall region Aw, for example, in the case where the overall video Aw is made up of a single video, information representing what type of objects (buildings, vehicles, products, people etc.) are contained at each position.
- In the case where the overall video Aw is made up of a plurality of different videos, genre information of each video, cast information, title information, video producer information, language information, information on position where the video was shot, and information on position related to content.
- Frequency information representing how often what types of user viewed what types of videos within the overall region Aw, currently or in the past, and evaluation information by each user on the video (example: 5 grades of evaluation).
- Frequency information representing how often that video was viewed, currently or in the past, by a plurality of users (hereafter referred to as socially related users) related to the viewing user of the client 2.
- In the case where the video is an advertisement, information on genre and product of the object of advertisement, and information such as target age and target gender information etc. It is also possible to further include viewing history information of the user with respect to advertisements.

The client status management section 70 further carries out exchange of messages conforming to streaming protocol with streaming client processing section 203 (described later) of the client 2. Messages conforming to streaming protocol are, for example, control messages requesting transmission, or pause or stop, of video signals, or messages for carrying out session continuation etc.

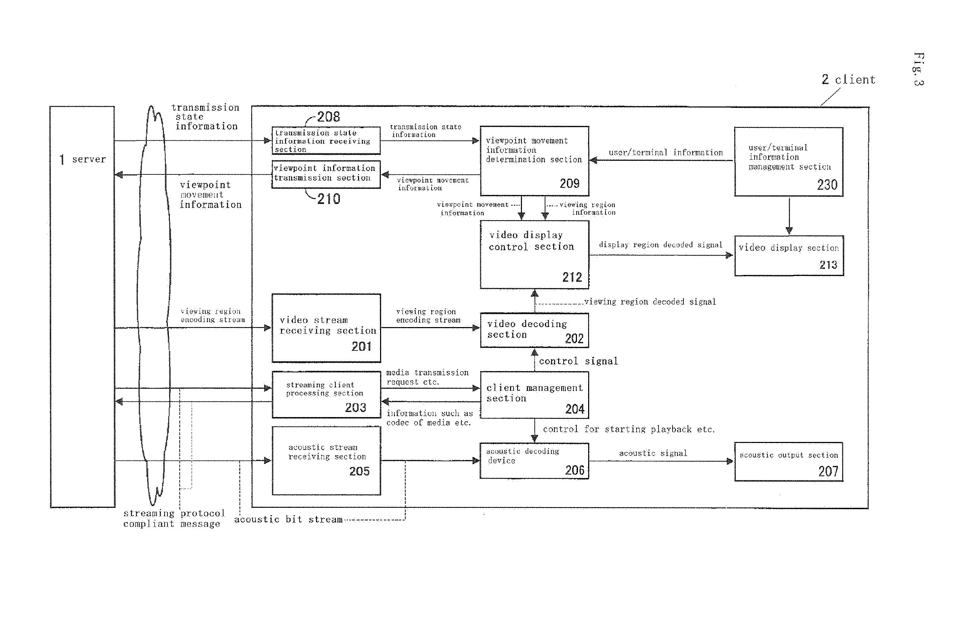

With this example, an example has been given of a structure where the transmission state information is transmitted separately from packets of the viewing region video bit stream, but it is also possible to adopt an arrangement where the transmission state information is stored in a header section of a video bit stream packet and transmitted to the client 2. In this case, the transmission state information is transmitted to the client 2 together with a single stream from the single stream transmission section 90, and not the client status management section 70. Accordingly, the video stream receiving section 201 of the client 2 acquires transmission state information from the header section, and transmits the information to the viewpoint movement information determination section 209 (refer to Fig. 3).

Description will continue again returning to Fig.2. The single stream generating section 80 reads out a plurality of divided region video bit streams (bit streams in specified resolution for each divided region) constituting the viewing region Av specified by the viewpoint movement information received by the viewpoint information receiving section 60. The plurality of bit streams that have been read out are then reconstituted and output as a single stream. As technology for reconstitution, it is possible to use that disclosed in non-patent literature 3 or patent literature 1, and detailed description thereof is omitted.

The single stream transmission section 90 packetizes the single stream that has been generated by the single stream generating section 80, and transmits the packetized single bit stream to the client 2.

Further, the server 1 includes audio signal input section 100-1 to 100-n, audio encoding processing section 110, a meta-information input section 120, an audio encoding bit stream/audio meta-information storage section 130, audio bit stream extraction/mixer processing section 140, and an audio bit stream transmission section 150. As for these elements, it is possible to use the technology disclosed in non-patent literature 3 or patent literature 1, and detailed description thereof is omitted.

### [Structural example of client]

Next, an internal structural example of the client 2 will be described with reference to the block diagram of Fig.3. The client 2 includes a video stream receiving section 201, a video decoding section 202, a streaming client processing section 203, a client management section 204, an audio stream receiving section 205, an audio decoding section 206, and an audio output section 207. Since these elements may be constructed in a way similar to the technology described in patent literature 1, detailed description thereof is omitted.

The client 2 also comprises the transmission state information receiving section 208, the viewpoint movement information determination section 209, viewpoint information transmission section 210, video display control section 212, video display section 213, and user/terminal information management section 230.

The transmission state information receiving section 208 receives transmission state information that has been transmitted from the server 1, namely relative position information of the viewing region Av with respect to the overall region Aw, and outputs to the viewpoint movement information determination section 209. The viewpoint movement information determination section 209 automatically generates viewpoint movement information based on video meta-information included in transmission state information received by the information state information receiving section 208, or user/terminal information input from the user/terminal information management section 230 regardless of user's designation via a user interface. Viewpoint movement information determination section 209 outputs the generated viewpoint movement information to the viewpoint information transmission section 210. The followings may be examples for method of decision.

### (1) [Viewpoint Movement Based On Position And Movement Of Objects Within Screen]

In this case, viewpoint movement information is determined using information representing what type of video is at what position within the overall region Aw. Here, as information to be noted within the video, there is, in the case where the overall video Aw is made up of a single video for example, information representing what type of object (building, vehicle, product, person etc.) is contained at each position. To give a further specific example, with a distribution service for soccer videos, in the case where a fixed point video distribution service for distributing a video giving an overview of an entire stadium is envisaged, a plurality of players are playing within the screen of the overall region Aw. Respective position information is assigned to each payer and the soccer ball within the screen, and it is possible to automatically determine viewpoint movement information so that a video centered on a particular player or the ball is at the center of the viewing region Av, in accordance with this position information. Alternatively, in the case where there is no position information of objects also, it is possible to determine viewpoint movement information on the basis of positions of detected objects, by automatically detecting positions of objects within the client. As technology for high-speed object recognition from received video it is possible to use that disclosed in Wei Zeng, Jun Du, Wen Gao, 'Qingming Huang. Robust moving object segmentation on H.264/AVC compressed video using the block-based MRF model, 'Real-Time Imaging, pp. 290-299, 2005, etc., and detailed description thereof is omitted.

### (2) [Viewpoint Movement Based On Video Category Or Cast Information]

In the case where the overall video Aw is made up of a plurality of different videos, meta information may have genre information, cast information, title information, video producer information and language information for each video constituting the overall video Aw. For example, assume a service such as a drama video distribution service or a music promotional video distribution service etc. In this case, it is possible to determine viewpoint movement information in the order of drama categories and artists the user likes based on user viewing history information and profile information transmitted from the server 1 to the client 2 as transmission state information, or user history information and profile information that has been stored in the client 2. This ranking can be (a) simply sorted for each video from viewing frequency information with respect to each category and artist contained in the stored viewing history up to now, or (b) acquired by performing clustering and making into groups from attribute information for category and artist, and then sorting for each video group. This ranking, is generally implemented using content based filtering technology (refer to: Collaborative and Content-based Filtering for Item Recommendation on Social Bookmarking Websites. T. Bogers and A. Van den Bosch. In: Proceedings of the ACM RecSys '09 workshop on Recommender Systems and the Social Web, pages 9-16, 2009.).

### (3) [Viewpoint Movement Based On Position Information]

Assume a video service in which the overall video Aw is made up of a plurality of different videos, and each video has shooting position information. This video service is used, for example, in a user generated video sharing service, video distribution services typified by travel programs, or a sightseeing video distribution service by local government. With current position information of the client 2 that is capable of being automatic acquired using GPS or the like as a key, viewpoint movement information for moving the viewing region Av is determined taking into consideration the relationship between position information of the videos constituting the overall video Aw and physical position of the client 2. It is possible to determine viewpoint movement information in order to sort video groups in order of closest distance from the current position of the client 2, and to move between videos in accordance with this order.

### (4) [Viewpoint Movement Based On Viewing History Of Other Users]

Frequency information representing how often other users besides the user of the client 2 has viewed, currently or in the past, and evaluation information of a video by each user (for example, 5 levels of evaluation) are assigned to each video region (divided video) within the overall region Aw. In this case, by taking into consideration the viewing frequency and the evaluation information, a ranking of divided videos is calculated, and it is possible to automatically specify a video to be viewed. For example, by simply multiplying the viewing frequency and the evaluation, it is possible to calculate an index for specifying the ranking of each divided video. Further, by utilizing what video users (socially related users) related to the viewing user of the client 2 are currently viewing, or a frequency indicating how often they viewed in the past, it becomes possible to determine an optimum transfer path. In this way it is possible to determine the viewpoint movement information.

### (5) [Viewpoint Movement Based On Video Distribution Service Including Advertisement Videos]

A video distribution service including advertisement videos in each of the above described video distribution services and systems is envisaged. In this case, it is possible to determine viewpoint movement information based on genre and product information, target age, target gender information etc. of the advertised object, and on viewing user profiles.

Common to the above described cases (1) - (5), determining the viewpoint movement information requires moving between videos most efficiently, taking into consideration respective likelihood of divided videos constituting the viewing region Av (for example, with the example of position, closeness between physical position at which the video was shot, and physical position at which the client 2 currently exists) and proximity of divided videos within the overall video Aw, namely movement distance within the screen. This subject is considered as a traveling salesman problem in the related art, and many algorithms have been proposed (refer, for example, to Hassin, R.; Rubinstein, S. (2000), 'Better approximations for max TSP', Information Processing Letters 75: pp.181-186).

Here, user and terminal information input from the user/terminal information management section 230 is information such as, for example, past viewing history of the user, user information such as a user profile, physical position and location information for the terminal currently operated as client, in-use CPU information, etc., but is not limited thereto.

The viewpoint information transmitting section 210 transmits viewpoint movement information that has been determined by the viewpoint movement information determination section 209 to the server 1.

The viewpoint movement information determination section 209 outputs viewpoint movement information that has been determined within the viewpoint movement information determination section 209, and viewing region information representing position information of the viewing region Av with respect to the overall region Aw, constituting the transmission state information from the server 1, to the display control section 212.

A decoded video signal (hereafter referred to as viewing region decoded signal) for the viewing region video bit stream that was decoded by the video decoding section 202 is input to the display control section 212. Also, viewing region information representing position of this viewing region decoded signal is input from the viewpoint movement information determination section 209 to the display control section 212. The display control section 212 converts the viewing region decoded signal to a position within the display region Ad using viewing region information and viewpoint movement information, and carries out adjustment of display position. After that, the display control section 212 outputs a decoded video signal that has had display position adjusted (hereafter referred to as display region decoded signal) to the display section 213.

The display section 213 is constituted by an LCD (Liquid Crystal Display) or organic EL (Electro Luminescence) panel or the like, and displays the display region decoded signals that have been supplied from the display control section 212 as an image on the display screen.

As a result of this type of processing, since viewing region and resolution of the video are changed automatically even if the user has not consciously moved the viewing region via an interface or the like, discovery of new videos becomes possible even while passively viewing various videos.

### [Operational Example Using Transmission System]

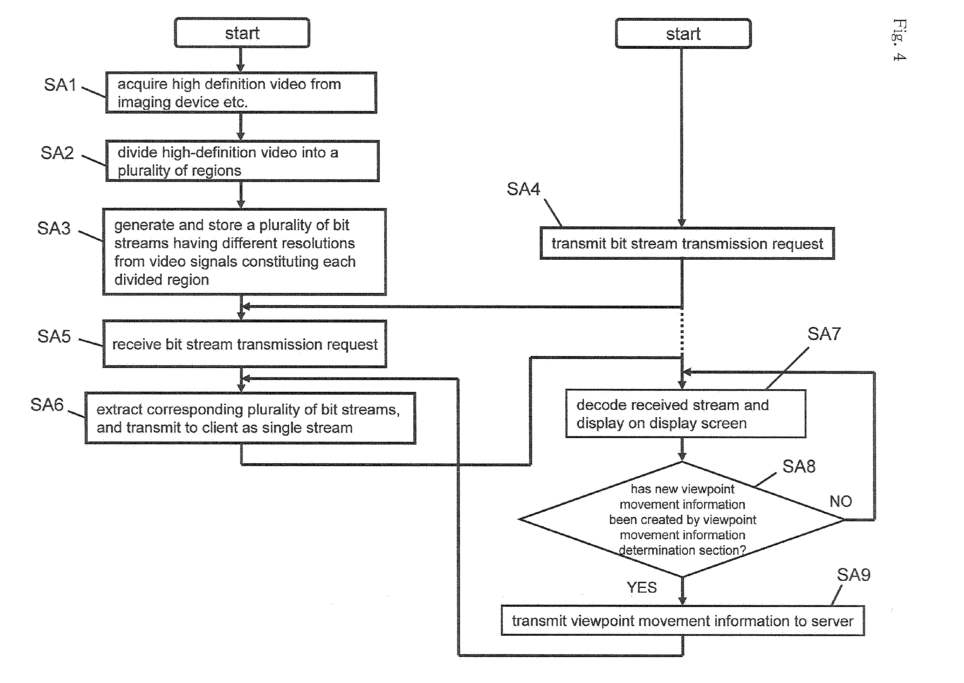

Next, an example of processing by the server 1 and client 2 of the transmission system of this example will be described with reference to the flowchart of Fig.4. First, the server 1 acquires a video signal that has been output from the video signal input section 10 (Step SA1). Next, the video region division processing section 20 divides the video that was acquired in step SA1 into one or more regions (step SA2). The partial region encoding processing section 30 then generates a plurality of bit streams of different resolutions from video signals constituting each of the divided regions, and stores in the video bit stream group storage section 40 (step SA3). With this example, a low-resolution stream, a medium-resolution stream group, and a high-resolution stream group are generated.

Next, the client 2 sends an initial viewpoint movement information and a transmission request for requesting transmission of the bit stream from the server 1 (step SA4).

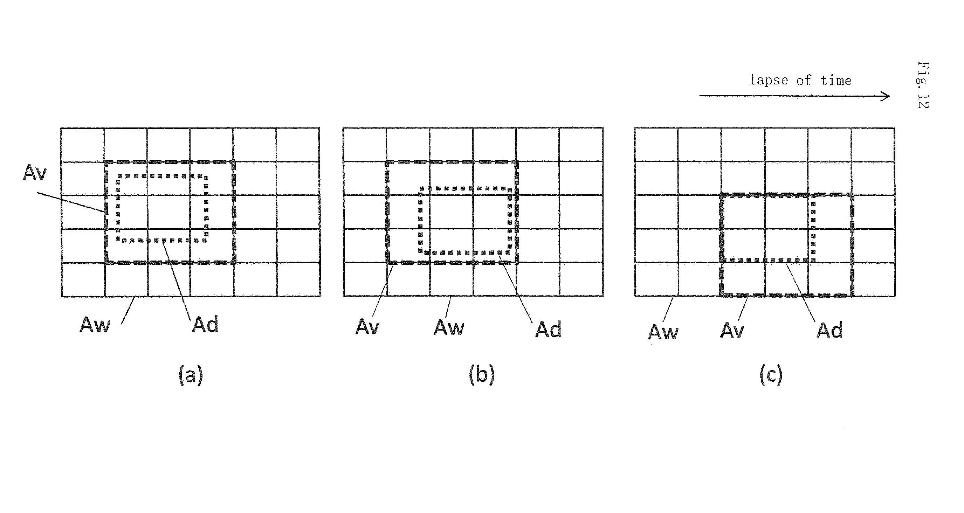

If the client status management section 70 of the server 1 receives the transmission request and the viewpoint information receiving section 60 receives the initial viewpoint movement information (step SA5), the single stream generating section 80 extracts a bit stream from the video bit stream group storage section. The single stream transmission section 90 transmits the extracted bit stream to the client 2 (step SA6). An examples of display region Ad specified based on the initial viewpoint movement information is shown in Fig.12(a). In this example, single stream generation section 80 specifies viewing region Av encompassing the initial display region Ad corresponding to the range of the initial display region Ad. Since the viewing region Av is made of the divided regions, the single stream generation section 80 can specify the video bit stream corresponding to each of divided regions and connect these, so as to generate a single stream to be transmitted.

At the client 2, the bit stream that was received by the video stream receiving section 201 is decoded by the video decoding section 202, and the display control section 212 displays the display region decoded signal that was obtained by the decoding as an image on the display section 213 (step SA7).

Here, when the viewpoint movement information determination section 209 of the client 2 has created new viewpoint movement information (step SA8), the created viewpoint movement information is transmitted by the viewpoint information transmitting section 210 to the server 1 (step SA9).

After that, if viewpoint information is received by the viewpoint information reception section 60 of the server 1, a single stream is similarly created to be transmitted to the client 2. The client 2 can then continue to present the received stream to the user (Step SA6 - S9). In Fig. 12(b), the display region Ad is moved within the limits of the viewing region Av as a result of viewpoint movement. However, in this step, since the display region Ad is within the limits of the viewing region Av, it is not necessary to update the viewing region video bit stream that corresponds to the viewing region Av. On the other hand, in Fig. 12(c), the display region Ad is moved beyond the limits of the viewing region Av as a result of viewpoint movement. In this state, since the display region Ad is beyond the limits of the viewing region Av, a new viewing region Av is set, and the viewing region video bit stream is updated accordingly.

### [Effect Of The First Embodiment]

According to the above described first embodiment, since viewing region and resolution of the video are changed automatically within the client 2 even if the user has not consciously moved the viewing region via an interface or the like, discovery of new videos becomes possible even while passively viewing various videos. Also, by realizing this control in a closed format within in the client 2, it is possible to achieve the above-described affect without altering most of the server structure and operation up to now, signals and control between the client and the server, or the client structure.

### <2. Second Embodiment>

Next, a second embodiment of the present invention will be described. With this embodiment, an example will be described in which determination of viewpoint movement information is implemented on the server, and that information is returned to the server by way of the client. In the description of this embodiment, elements that are basically common to the above-described first embodiment will be assigned the same reference numerals, and complex description avoided.

Description will be given in the following order.
(1) Transmission system Overview
(2) Structural example of server
(3) Structural example of client
(4) Transmission system operational example

### [Overview Of Transmission System]

First, an overview of the transmission system of this example will be described by comparison with Fig. 1.
In Fig. 1 the viewpoint movement information is transmitted from the client 2 to the server 1. Conversely, with this embodiment, the viewpoint movement information is determined at the server 1, and this information is transmitted to the client 2. Processing subsequent to this is the same as in the above-described first embodiment.

The server 1 has a viewpoint movement information determination section internally, with viewpoint movement information being determined in this determination section and sent to the client 2. Determination of the viewpoint movement information can be carried out similarly to in the above-described first embodiment. Further, with this second embodiment, by determining viewpoint movement information within the server, it become possible to efficiently realize viewpoint movement information. For example, in the case of determination of viewpoint movement information on the server, it is possible to use collaborative filtering technology (refer to Collaborative and Content-based Filtering for Item Recommendation on Social Bookmarking Websites. T. Bogers and A. Van den Bosch. In: Proceedings of the ACM RecSys '09 workshop on Recommender Systems and the Social Web, pages 9-16, 2009.) that analyzes a large amount of viewing history for a large amount of users, and uses attributes between users having the same preferences.

At the client 2, display control is carried out on the basis of viewpoint movement information that has been received from the server 1, and in the client 2 this viewpoint movement information is returned to the server 1 simultaneously with displaying an image corresponding to the display region Ad. Processing after that on the server 1 is the same as for the first embodiment.

### [Structural Example Of The Server]

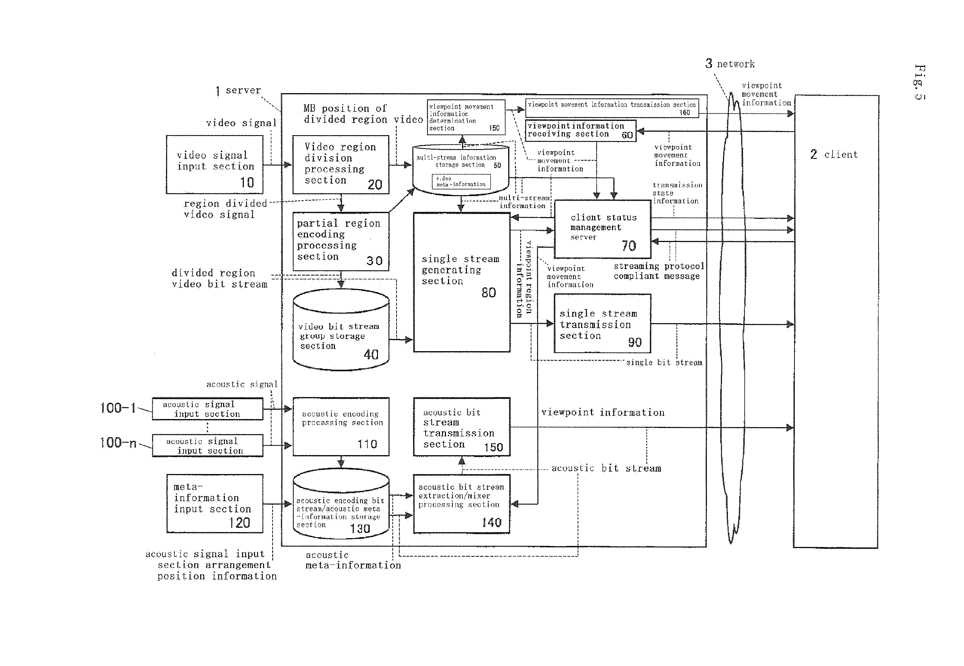

Next, a structural example of the server 1 will be described with reference to Fig. 5. Fig. 5 is a block diagram showing an internal structural example of the server 1. The server 1 of this embodiment differs from the above described first embodiment in being further provided with a viewpoint movement information determination section 150.

Viewpoint movement information that has been determined by the viewpoint movement information determination section 150 is transmitted to the client 2 via a viewpoint movement information transmission section 160.

### [Structural Example Of Client]

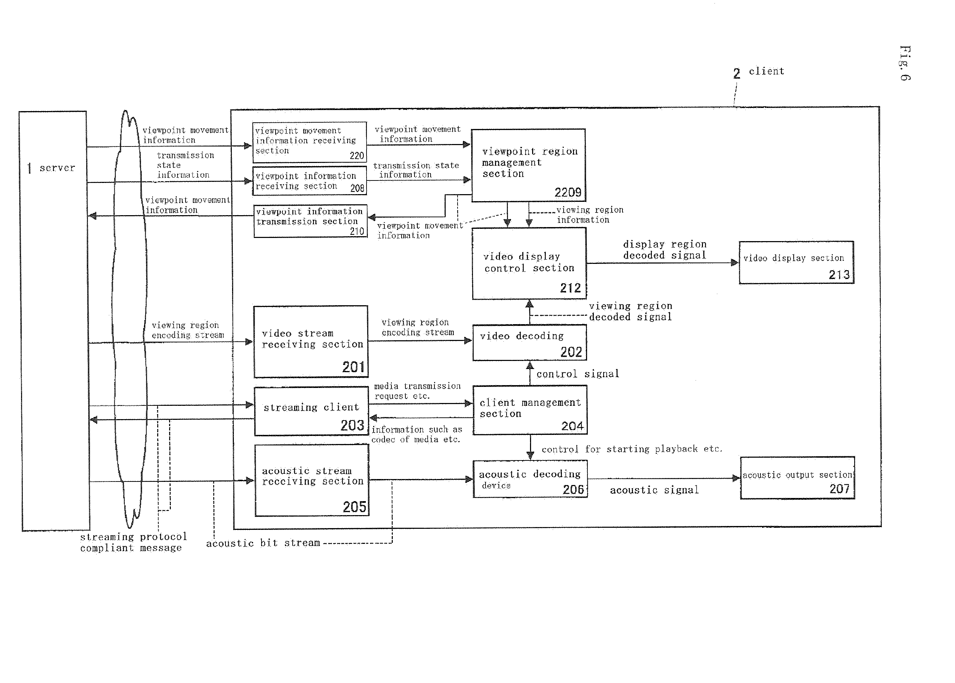

Next, the client 2 will be described with reference to Fig. 6. The client 2 comprises the transmission state information receiving section 208, viewpoint region management section 2209, viewpoint information transmission section 210, display control section 212, display section 213, and viewpoint movement information receiving section 220, but this client 2 differs from that of the first embodiment in that the viewpoint movement information determination section is not provided.

The transmission state information receiving section 208 receives transmission state information that has been transmitted from the server 1, namely viewing region information that is relative positional information of the viewing region Av with respect to the overall region Aw, and outputs to the viewpoint region management section 2209.

The viewpoint movement information receiving section 220 receives the viewpoint movement information from the server 1, and outputs to the viewpoint region management section 2209.

The viewpoint region management section 2209 outputs the viewpoint movement information from the viewpoint movement information receiving section 220 to the viewpoint information transmission section 210.

The viewpoint information transmission section 210 transmits the viewpoint movement information that has been received by the viewpoint region management section 2209 to the server 1.

The viewpoint region management section 2209 outputs viewing region information that is contained in the transmission state information received by the transmission state information receiving section 208, and viewpoint movement information from the server that has been received via the viewpoint movement information receiving section 220, to the display control section 212.

### [Operational Example Using Transmission System]

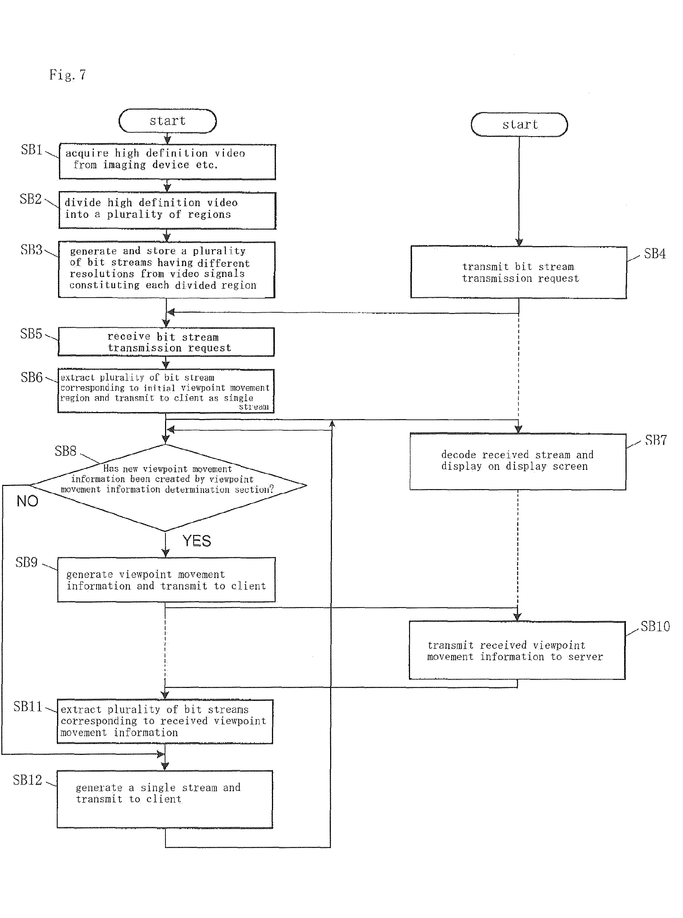

Next, an example of processing by the server 1 and the client 2 of the transmission system of this example will be described with reference to the flowchart of Fig. 7. First, the server 1 acquires a video signal that has been output from the video signal input section 10 (Step SB1). Next, the video region division processing section 20 divides the video acquired in step SB1 into one or more regions (step SB2). The partial region encoding processing section 30 then generates a plurality of bit streams of different resolutions from the video signals constituting each of the divided regions, and stores in the video bit stream group storage section 40 (step SB3).

Next, the client 2 transmits a transmission request to the server 1 so as to transmit the bit streams (step Sub4).

Once the client status management section 70 of the server 1 receives the transmission request (Step SB5), the single stream generating section 80 extracts a bit stream specified by the initial viewpoint movement region from the video bit stream group storage section 40, and the extracted viewing region video bit stream is transmitted to the client 2 by the single stream transmission section 90 (step SB6).

At the client 2, the video stream receiving section 201 receives the viewing region video bit stream, the video decoding section 202 decodes the bit stream, and a display region decoded signal acquired by decoding is displayed as an image on the display section 213 by the display control section 212 (step SB7).

Here, in the event that the viewpoint movement information determination section 150 of the server 1 has created viewpoint movement information (Step SB8), viewpoint movement information is transmitted via the viewpoint movement information transmission section 160 of the server 1 to the client 2 (step SB9). If the viewpoint movement information determination section 150 has not created viewpoint movement information, the current bit stream (single bit stream) continues to be transmitted (Step 12).

The client 2 transmits the received viewpoint movement information back to the server 1 (step SB10).

If the viewpoint movement information is received by the viewpoint information reception section 60 of the server 1, then a plurality of bit streams specified by the viewpoint movement information are extracted from the video bit stream group storage section 40 by the single stream generating section 80 (step SB11), a viewing region video bit stream is generated, and further transmitted from the single stream transmission section 90 to the client 2 (step SB12).

At the client 2, a single stream that has been received by the video stream receiving section 201 is decoded by the video decoding section 202, the viewing region decoded signal acquired through decoding is subjected to positional adjustment by the display control section 212, displayed on the display section 213 as a display region decoded signal (step SB7).

At the server 1, processing transitions to step SB8 in order to detect if there is viewpoint movement information creation, similarly to the above (step SB12 → step SB8).

### [Effect Of The Second Embodiment]

According to the above described second embodiment, since viewing region and resolution of a video are changed automatically within the client 2 even if the user has not consciously moved the viewing region via an interface or the like, discovery of new videos becomes possible even while passively viewing various videos. In particular, since it is possible to determine viewpoint movement information at the server side, it is possible to simply implement detailed movement control taking into consideration various and massive information such as viewing histories of other users and attributes of video information etc. Also, this information is delivered to the client, and since operation subsequent to that is the same as in the above-described first embodiment it is possible to obtain the above mentioned effect without significant change in essential structure and operation of the server and the client, or to signals and control between the server and the client.

Other operation and advantages of the second embodiment are basically common to those of the above-described first embodiment, and so more detailed description will be omitted.

Also, with this second embodiment, the viewpoint movement information determination section is included in the server 1, but it is also possible to have a structure where the viewpoint movement information determination section is included in another server than the server 1. The structure and operation in this case can be understood from the previous description, and so detailed description will be omitted.

### <3. Third Embodiment>

Next, a third embodiment of the present invention will be described. With this embodiment, an example will be described in which determination of viewpoint movement information is implemented on the server, and this information is not transmitted to the client 2 but used in bit stream extraction processing within the server. In the description of this embodiment, elements that are basically common to the above-described first embodiment will be assigned the same reference numerals, and complex description avoided.

Description will be given in the following order.
(1) Transmission system Overview
(2) Structural example of server
(3) Structural example of client
(4) Transmission system operational example

### [Overview Of Transmission System]

First, an overview of the transmission system of this example will be described by comparison with Fig. 1.
In Fig. 1 the viewpoint movement information is transmitted from the client 2 to the server 1. On the contrary, with this third embodiment viewpoint movement information is determined on the server 1, and this information is used directly by a single stream generation section within the server 1. Viewpoint movement information is not transmitted and received between the client 2 and the server 1.

The server 1 internally comprises a viewpoint movement information determination section. The structure of this viewpoint information determination section may be the same as that in the second embodiment described above.

Viewpoint movement information that has been determined at the server 1 is output via the client status management section to the single stream generation section, and after that bit stream has been extracted a viewing region video bit stream is generated and transmitted to the client 2.

### [Structural example of the server]

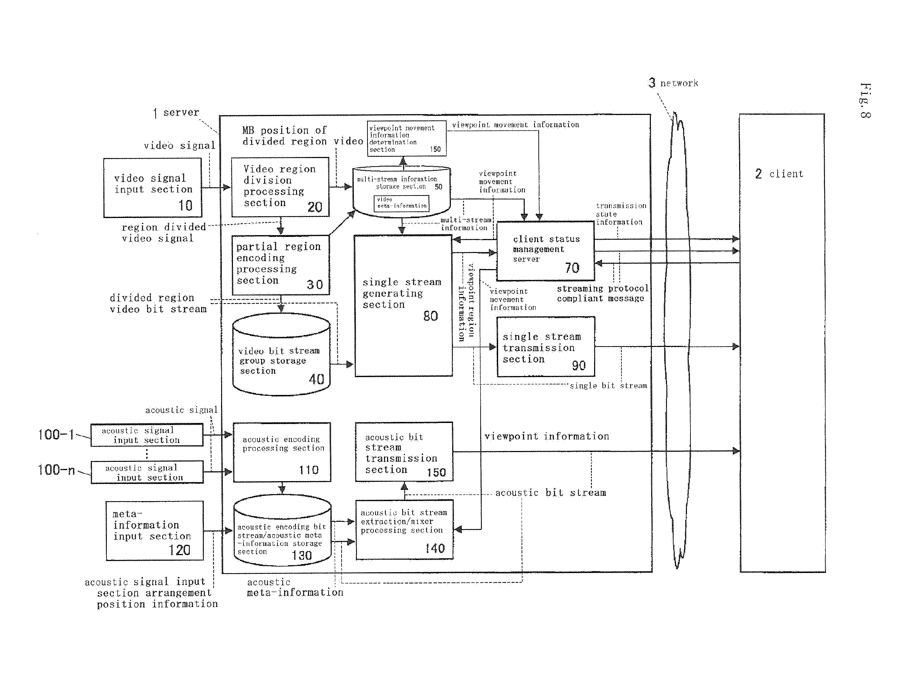

Next, a structural example of the server 1 will be described with reference to Fig. 8. Fig. 8 is a block diagram showing an internal structural example of the server 1. The server 1 of this embodiment differs from the above described first embodiment in being further provided with a viewpoint movement information determination section 150.

The viewpoint movement information determination section 150 determines viewpoint movement information and outputs to the client status management section 70.

The client status management section 70 outputs viewpoint movement information to the single stream generating section 80. Processing after that is the same as for the first and second embodiments.

However, with this embodiment, the transmission state information transmitted to the client 2 by the client status management section 70 includes not only viewing region information which is relative position information of the viewing region Av with respect to the overall region Aw, but also viewpoint movement information.

### [Structural Example Of Client]

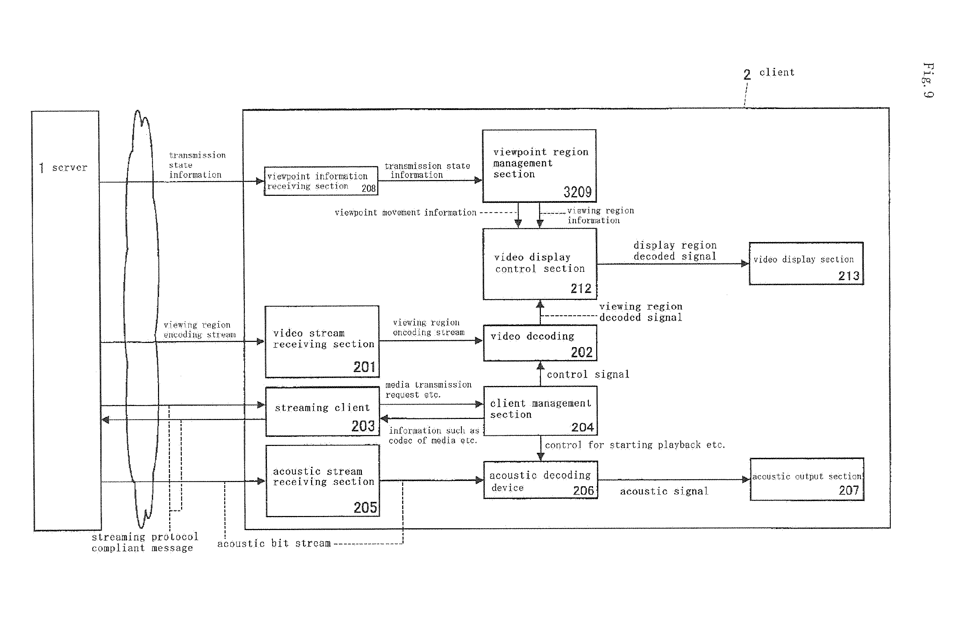

Next, the client 2 will be described with reference to Fig. 9. The client 2 comprises the transmission state information receiving section 208, viewpoint region management section 3209, display control section 212, and display section 213, but there is no processing section for sending the viewpoint movement information.

The transmission state information receiving section 208 of the client 2 receives transmission state information that has been transmitted from the server 1, namely viewpoint movement information and relative position information that is relative positional information of the viewing region Av with respect to the overall region Aw, and outputs to the viewpoint region management section 3209.

The viewpoint region management section 3209 outputs viewpoint movement information, as well as viewing region information representing position information of the viewing region Av relative to the overall region Aw that has been received by the transmission state information receiving section 208, to the display control section 212. Also, viewing region information representing position of this viewing region decoded signal is input from the viewpoint movement information determination section 209 to the display control section 212. The display control section 212 converts the viewing region decoded signal to a position within the display region Ad using viewing region information and viewpoint movement information, and carries out adjustment of display position. After that, the display control section 212 outputs a decoded video signal that has had display position adjusted (hereafter referred to as display region decoded signal) to the display section 213.

### [Operational Example Using Transmission System]

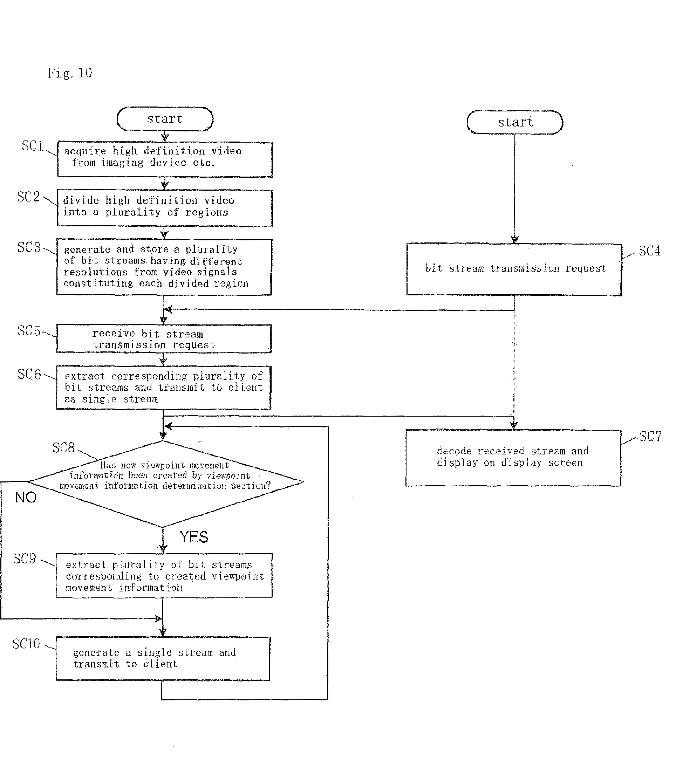

Next, an example of processing by the server 1 and client 2 of the transmission system of this example will be described with reference to the flowchart of Fig. 10. First, the server 1 acquires a video signal that has been output from the video signal input section 10 (Step SC1). Next, the video region division processing section 20 divides the video that was acquired in step SC1 into one or more regions (step SC2). The partial region encoding processing section 30 then generates a plurality of bit streams of different resolutions from video signals constituting each of the divided regions, and stores in the video bit stream group storage section 40 (step SC3).

Next, the client 2 sends a transmission request to the server 1 so as to transmit the bit stream (step SC4).

Here, in the server 1 extraction of a bit stream specified on the basis of given initial viewpoint movement information is carried out, a single stream is constructed by the single stream generating section 80, and transmitted by the single stream transmission section 90 to the client 2 (step SC6).

At the client 2, the video decoding section 202 decodes the single stream received by the video stream receiving section 201 and the viewing region decoded signal that was obtained by the decoding is positionally adjusted and displayed as an display region decoded signal by the display control section 212 on the display section 213 (step SC7).

Here, viewpoint movement information is created by the viewpoint movement information determination section 150 of the server 1 (step SC8), then a plurality of bit streams specified by the viewpoint movement information are extracted from the video bit stream group storage section 40 by the single stream generating section 80 (step SC9), a viewing region video bit stream is generated, and further transmitted by the single stream transmission section 90 to the client 2 (step SC10).

Further, during display of the video, the viewpoint movement information determination section 150 creates viewpoint movement information as required, and reflects this in the operation of the single stream generating section 80 (step SC10 → step SC8).

### [Effect Of The Third Embodiment]

According to the above described third embodiment, since viewing region and resolution of a video are changed automatically within the client 2 even if the user has not consciously moved the viewing region via an interface or the like, discovery of new videos becomes possible even while passively viewing various videos. In particular, since there is no transmission or reception between the server and the client with respect to viewpoint movement information, and all determination is carried out at the server side and reflected in the viewing region video, client side processing, such as conventional television broadcast, can be simplified.

The present invention is not limited to the above-described embodiments, and various modifications can additionally be obtained within a scope that does not depart from the spirit of the invention. For example, with this embodiment viewpoint movement information is automatically determined by the viewpoint movement information determination section, but in conjunction with this it is also possible to have a structure where viewpoint movement information is operated from a user interface on the client. Remaining structure and advantages are the same as those of the above described first and second embodiments, and so detailed description will be omitted.

## Claims

1. A transmission system comprising a transmission unit and a viewpoint movement information determination section, wherein
the transmission unit comprises
a video region division processing section for dividing a video region of an input video signal into a specified number of regions, and generating a plurality of region divided video signals corresponding to each of the divided regions obtained by the division;
an encoding processing section for generating a plurality of video bit streams by encoding the plurality of region divided video signals;
a video bit stream group storage section for storing a plurality of video bit streams that have been generated by the encoding processing section;
a transmission bit stream generating section, for extracting the video bit stream from the video bit stream group storage section based on the viewpoint movement information that has been generated by the viewpoint movement information determination section, and generating a transmission video bit stream; and
a video bit stream transmission section for transmitting the transmission video bit stream that was generated by the transmission bit stream generating section to the receiving unit,
wherein
the viewpoint movement information determination section is constructed to determine viewpoint movement information in order to specify a region of a viewing subject from among the video regions; and
the viewpoint movement information determination section is further configured to automatically determine the viewpoint information, regardless of user instruction, based on specified data.

2. The transmission system of claim 1, further comprising a receiving unit, wherein
the viewpoint movement information determination section is included in the receiving unit, and
the viewpoint movement information determination section is configured to transmit viewpoint movement information that has been determined to the transmission unit.

3. The transmission system of claim 1, wherein the viewpoint movement information determination section is included in the transmission unit.

4. The transmission system of claim 1, wherein the viewpoint movement information determination section is included as part of another server besides the transmission unit.

5. The transmission system of any one of claim 1 to claim 4, wherein the specified data is any of a past viewing history of the same user, viewing history of another user, viewing user profile, associations between a plurality of region divided videos, weight assigned to each region divided video by a video provider, movement information for objects within the video region, current physical position of a user, or information associated with the position.

6. A transmission unit, comprising:
a video region division processing section for dividing a video region of an input video signal into a specified number of regions, and generating a plurality of region divided video signals corresponding to each of the divided regions obtained by the division;
an encoding processing section for generating a plurality of video bit streams by encoding the plurality of region divided video signals;
a video bit stream group storage section for storing a plurality of video bit streams that have been generated by the encoding processing section;
a viewpoint movement information determination section for determining viewpoint movement information in order to specify a region of a viewing subject from among the video regions;
a transmission bit stream generating section, for extracting the video bit stream from the video bit stream group storage section based on the viewpoint movement information that has been generated by the viewpoint movement information determination section, and generating a transmission video bit stream; and
a video bit stream transmission section for transmitting the transmission video bit stream that was generated by the transmission bit stream generating section to the receiving unit,
wherein
the viewpoint movement information determination section is further configured to automatically determine the viewpoint information, regardless of user instruction, based on specified data.

7. A transmission method, comprising:
a video region division processing step for dividing a video region of an input video signal into a specified number of regions, and generating a plurality of region divided video signals corresponding to each of the divided regions obtained by the division;
an encoding processing step for generating a plurality of video bit streams by encoding the plurality of region divided video signals;
a step of storing a plurality of video bit streams that have been generated in the encoding processing step into a video bit stream group storage section;
a transmission bit stream generating step, for extracting the video bit stream based on the viewpoint movement information that has been generated in the viewpoint movement information determination step from the video bit stream group storage section, and generating a transmission video bit stream; and
a video bit stream transmission step for transmitting the transmission video bit stream that was generated in the transmission bit stream generating step to a receiving unit,
wherein
in the viewpoint movement information determination step, viewpoint movement information is determined in order to specify a region for viewing from among the video regions, and
further in the viewpoint movement information determination, the viewpoint information is automatically determined, regardless of user instruction, based on specified data.

8. A computer program for causing the method of claim 7 to be executed on a computer.
